# EUROPÄISCHE PATENTANMELDUNG

(11) **EP 4 507 142 A2**
(43) Veröffentlichungstag der Anmeldung: **12.02.2025**
(21) Anmeldenummer: 24193190.6
(22) Anmeldetag: 06.08.2024
(51) Int. Cl.: H02G 3/08, H02G 3/12

(54) **INSTALLATIONSDOSE UND VERFAHREN ZUR HERSTELLUNG EINER INSTALLATIONSDOSE**

(30) Priorität: 07.08.2023 DE 102023120849
(71) Anmelder: Kaiser GmbH & Co. KG, 58579 Schalksmühle (DE)
(72) Erfinder:
(74) Vertreter: Rentsch Partner AG

(57) **Zusammenfassung**

Die vorliegende Erfindung bezieht sich auf eine Installationsdose (1) für elektrotechnische Installationen. Die Installationsdose (1) umfasst hierbei einen Dosenkörper (2) mit einer sich in eine axiale Richtung (x) von einem vorderseitigen Ende (4) zu einem rückseitigen Ende (5) erstreckenden röhrenförmigen Seitenwand (3), welche einen Installationsraum (6) umgibt, der über eine vorderseitige, von der röhrenförmigen Seitenwand (3) berandete Installationsöffnung (7) zugänglich ist, und einem der Installationsöffnung (7) gegenüberliegenden Dosenboden (11). Die röhrenförmige Seitenwand (3) bildet weiter mindestens eine aus der axialen Richtung betrachtet nach aussen über eine Innenkontur der Installationsöffnung (7) vorragende Tasche (15) aus. Die vorliegende Erfindung bezieht sich ferner auf ein Herstellungsverfahren einer derartigen Installationsdose (1).

## Beschreibung

Die vorliegende Erfindung bezieht sich auf eine Installationsdose für elektrotechnische Installationen und ein Verfahren zur Herstellung einer Installationsdose.

Um elektrische Schalter, Steckdosen, Lampen, Apparate, etc. an den dazu vorgesehenen Stellen in einem Gebäude eines Bauwerkes anbringen zu können, werden unter anderem Installationsdosen verwendet. Unter solchen Installationsdosen werden beispielsweise Unterputzdosen, Einlasskästen, Unterputzabzweigdosen, Verteilerdosen und dergleichen verstanden. Die Installationsdosen weisen typischerweise einen zylinder- oder quaderförmigen Dosenkörper mit einem Dosenboden und einer sich röhrenförmig in eine axiale Richtung erstreckenden Seitenwand auf. Diese umfassen einen über eine Installationsöffnung zugänglichen Installationsraum.

Heutzutage werden die Installationsdosen in der Regel durch Spritzguss hergestellt, bzw. die Installationsdosen umfassen oder bestehen aus Spritzgussmaterialien. Wenn derartige Installationsdosen rückseitig geschlossen sind und somit einen in die Seitenwand übergehenden und an diese angeformten Dosenboden umfassen, liegt der Installationsraum aus der axialen Richtung betrachtet in der Regel innerhalb eines (lichten) Querschnitts, respektive einer Innenkontur der Installationsöffnung. Ein Beispiel derartiger Installationsdosen ist die EP3540885 derselben Anmelderin. Dieser Aufbau der Installationsdose ermöglicht eine einfache Herstellung im Spitzguss mit einem Kern, welcher im Installationsraum angeordnet ist und durch die Installationsöffnung entformbar ist. Ein Nachteil derartiger Installationsdosen ist jedoch, dass nur ein begrenzter Installationsraum zur Verfügung steht und der Anschluss von den Elektroinstallationen je nach Anwendung umständlich sein kann.

Weiter sind Installationsdosen bekannt, welche anstelle des rückseitigen Dosenbodens eine rückseitige Montageöffnung aufweisen. Ein Beispiel derartiger Installationsdosen ist die EP3584898 derselben Anmelderin. In diesem Fall kann die Installationsdose alternativ über die Montageöffnung und nicht über die Installationsöffnung entformt werden. Die Grösse des Installationsraums wird in diesem Fall durch die rückseitige Montageöffnung bedingt. Derartige Installationsdosen haben jedoch den Nachteil, dass die Montageöffnung mit einem Deckel und ggf. einer Dichtung versehen werden muss. Dies führt somit zu einem weiteren benötigten Montageschritt oder Produktionsschritt (Herstellung und Anbringung des Deckels). Dies kann ebenfalls zu erhöhten Herstellungskosten führen.

Es ist eine Aufgabe der Erfindung eine Installationsdose bereitzustellen, welche eine einfache Montage der Elektroinstallation erlaubt. Es ist eine weitere Aufgabe der Erfindung eine Installationsdose bereitzustellen, welche einfach hergestellt und/oder montiert werden kann. Es ist eine weitere Aufgabe der Erfindung ein einfaches Verfahren zur Herstellung einer derartigen Installationsdose bereitzustellen.

Die Installationsdose gemäss der Erfindung umfasst einen Dosenkörper mit einer sich in eine axiale Richtung von einem vorderseitigen Ende zu einem rückseitigen Ende erstreckenden röhrenförmigen Seitenwand. Die röhrenförmige Seitenwand erstreckt sich um eine Mittelachse der Installationsdose, welche sich folglich ebenfalls in axiale Richtung erstreckt. Die röhrenförmige Seitenwand umgibt einen Installationsraum, welcher über eine vorderseitige, von der röhrenförmigen Seitenwand berandete Installationsöffnung des Dosenkörpers zugänglich ist. Die röhrenförmige Seitenwand kann entlang der axialen Richtung den Querschnitt ändern. Z.B. kann die röhrenförmige Seitenwand aus der axialen Richtung betrachtet abschnittsweise rund und/oder eckig sein. Die röhrenförmige Seitenwand geht ferner an dem rückseitigen Ende in einen Dosenboden des Dosenkörpers über. Der Dosenboden liegt also der Installationsöffnung gegenüber. Der Dosenkörper (umfassend die Seitenwand und den Dosenboden) ist mit Vorteil einstückig ausgestaltet.

Gemäss der Erfindung bildet der Dosenkörper, respektive die röhrenförmige Seitenwand aus der axialen Richtung betrachtet mindestens eine über eine Innenkontur der Installationsöffnung radial nach aussen vorragende Tasche aus. Mit Vorteil sind mehrere Taschen vorhanden. Die Tasche bildet einen Tascheninnenraum aus, welcher Teil des Installationsraums ist. Der durch die Tasche bereitgestellte erweiterte Querschnitt des Installationsraums kann z.B. Überlängen von Installationskabel aufnehmen ohne den angedachten Raum für die eigentliche Elektroinstallation (z.B. Steckdose oder ähnliches) zu verringern.

Der Dosenkörper kann hierbei aus einer Hartplastikkomponente bestehen. Mit Vorteil weist der Dosenkörper mindestens eine Schicht einer Hartplastikkomponente auf, welche den Installationsraum umgibt. Die Schicht aus der Hartplastickomponente schützt also den Installationsraum und hält diesen mit Vorzug formstabil, respektive die Tasche ist mit Vorzug formstabil. Eine formstabile Tasche kann die Elektroinstallation z.B. bei Krafteinfluss von aussen auf die Installationsdose vor Beschädigungen schützen. Unter formstabil wird verstanden, dass die Tasche nicht eingedrückt oder nach innen umgestülpt werden kann.

Der Dosenkörper kann weiter mindestens eine Einführöffnung zum Einführen von Installationsleitungen und/oder Installationsrohren in den Installationsraum aufweisen. Ebenfalls kann die Installationsöffnung durch einen Deckel der Installationsdose verschliessbar sein, respektive die Installationsdose kann einen Deckel zum Verschliessen der Installationsöffnung aufweisen. Je nach Anwendung, kann die Installationsdose ferner zusätzliche Elemente und/oder Schichten aus einer weichelastischen Materialkomponente aufweisen, wie zum Beispiel eine die Einführöffnung verschliessende weichelastische Membran und/oder eine Dichtung zur Abdichtung des Deckels gegen den Dosenkörper. Die Elemente aus der weichelastischen Materialkomponente sind mit Vorteil am Dosenkörper und/oder am Deckel angeformt. Ebenfalls denkbar ist, dass die Installationsdose mindestens eine weitere Schicht aus einem anderen Material, wie z.B. eine Schicht aus intumeszierenden Material, umfasst, welche zumindest bereichsweise auf dem Dosenkörper aus der Hartplastikkomponente angeformt oder angebracht ist.

Wie beschrieben, kann der Dosenkörper mindestens eine Einführöffnung aufweisen. Die Einführöffnung kann ferner in einem initialen Zustand (d.h. vor der Montage und/oder im Verkaufszustand) von der weichelastischen (durchstossbaren) Membran oder einem heraustrennbaren Wandbereich verschlossen sein. Mindestens eine Einführöffnung des Dosenkörpers ist mit Vorteil in der mindestens einen Tasche angeordnet. Der durch die Tasche bereitgestellte erweiterte Querschnitt des Installationsraums kann somit ebenfalls in den Installationsraum hineinragende Installationsrohrenden aufnehmen. In der Tasche und an der mindestens einen Einführöffnung kann ergänzend ein Rastelement zum Befestigen eines Elektroinstallationsrohrs vorgesehen sein. Die Tasche ermöglicht also das einfache Montieren von Installationsrohren und/oder Installationskabeln an der Installationsdose.

Mit Vorteil weist die Tasche an einer Umfangsposition eine im Wesentlichen gleichbleibende Taschentiefe in axialer Richtung auf. Je nach Anwendung kann die Tasche alternativ oder ergänzend an den Dosenboden angrenzen. Die Taschentiefe wird aus der axialen Richtung betrachtet gemessen von der Innenkontur der Installationsöffnung radial nach aussen bis zur Innenseite der Tasche. In Umfangsrichtung kann die Tasche ferner nach aussen (von der Mittelachse wegweisend) gewölbt ausgeformt sein. Je nach Anwendung können an der Innenseite der Installationsdose zwei strukturierte Oberflächenelemente angeordnet sein, welche eine Eingriffsfläche für Spreizkrallen einer Elektroinstallation bereitstellen. Mit Vorteil ist die Tasche in Umfangsrichtung neben und/oder in axialer Richtung unterhalb der Oberflächenelemente angeordnet.

Durch die Tasche weist der Installationsraum in axialer Richtung einen variablen Querschnitt auf. In einem vorderseitigen Bereich des Installationsraumes kann dieser also normal zur axialen Richtung (mindestens) einen ersten Querschnitt und in einem rückseitigen Bereich Installationsraumes (mindestens) einen im Bezug zum ersten Querschnitt grösseren zweiten Querschnitt aufweisen. Selbstverständlich können ebenfalls in dem vorderseitigen Bereich mehrere erste und in dem rückseitigen Bereich mehrere zweite Querschnitte vorhanden sein. Der vorderseitige Bereich des Installationsraumes kann hierbei von dem vorderseitigen Ende der röhrenförmigen Seitenwand umgeben sein und/oder der rückseitige Bereich des Installationsraumes von dem rückseitigen Ende der röhrenförmigen Seitenwand umgeben sein. Mit Vorteil erstreckt sich der vorderseitige Bereich über 5% - 40% einer Länge des Dosenkörpers in axialer Richtung und/oder der rückseitige Bereich über 60 - 95% der Länge des Dosenköpers. Insbesondere erstreckt sich jedoch der vorderseitige Bereich über 5% - 20% der Länge des Dosenkörpers und/oder der rückseitige Bereich über 80 - 95% der Länge des Dosenköpers. Der (mindestens eine) zweite Querschnitt kann mindestens eine nach aussen gewölbte Sektion aufweisen, welche in radialer Richtung ausserhalb des ersten Querschnitts liegt. Die nach aussen gewölbte Sektion des (mindestens einen) zweiten Querschnitts liegt hierbei in der nach aussen gewölbten Tasche des Installationsraumes, wie oben näher beschrieben.

Je nach Anwendung kann in der röhrenförmigen Seitenwand weiter mindestens ein entlang einer definierten Kontur heraustrennbarer Wandbereich angeordnet sein. Der mindestens eine heraustrennbare Wandbereich kann sich hierbei in die axiale Richtung erstrecken. Mit Vorteil sind jedoch zwei heraustrennbare Wandbereiche vorhanden. Diese sind vorzugsweise gegenüberliegend voneinander in Bezug zur Mittelachse der röhrenförmigen Seitenwand angeordnet. Die zwei gegenüberliegend voneinander angeordneten Wandbereiche können hierbei parallel zueinander orientiert sein. Mit Vorteil umfasst die Installationsdose zwei heraustrennbare Wandbereiche zwischen denen in der Umfangsrichtung der Seitenwand die mindestens eine Tasche angeordnet ist.

Am vorderseitigen Ende der röhrenförmigen Seitenwand können ferner Befestigungselemente zum Befestigen einer Elektroinstallation in der Installationsdose angeordnet sein. Diese können in den Installationsraum und/oder in die Installationsöffnung ragen. D.h. diese können auf einer Innenseite der röhrenförmigen Seitenwand angeordnet, insbesondere angeformt, sein.

Je nach Anwendung kann die Installationsdose weiter eine Raststruktur zum Wirkverbinden einer Gegenraststruktur einer weiteren Installationsdose umfassen. Die Raststruktur ist hierbei mit Vorteil an einer Aussenseite der röhrenförmigen Seitenwand angeordnet. Die Raststruktur kann jedoch ebenfalls an dem die Installationsöffnung verschliessenden Deckel angeordnet sein. Die Raststruktur kann ein oder mehrere Rastelemente umfassen, welche(s) vorteilhafterweise einen Hinterschnitt in die (jeweilige) Verbindungsrichtung aufweist. Die Verbindungsrichtung ist hierbei diejenige Richtung aus der eine weitere Installationsdose auf die Installationsdose zum Wirkverbinden der Gegenraststruktur mit der Raststruktur zubewegt wird. Die Raststruktur weist mit Vorteil mindestens ein Paar Rastelemente auf. Ein Paar Rastelemente umfasst hierbei ein erstes und ein zweites Rastelement. Das erste und zweite Rastelement eines Paars von Rastelementen ist vorzugsweise in eine Umfangsrichtung der Installationsdose in Bezug zum (entsprechenden) heraustrennbaren Wandbereich gegenüberliegend voneinander angeordnet. Das erste als auch das zweite Rastelement kann je einen Hinterschnitt aufweisen. Mit Vorteil ist das erste Rastelement dazu ausgelegt mit einem zweiten Rastelement der Gegenraststruktur der weiteren Installationsdose wirkverbunden zu werden, wobei das zweite Rastelement der Gegenraststruktur baugleich zum zweiten Rastelement der Raststruktur ist. Ergänzend kann das zweite Rastelement dazu ausgelegt sein mit einem ersten Rastelement der Gegenraststruktur wirkverbunden zu werden, wobei das erste Rastelement der Gegenraststruktur baugleich zum ersten Rastelement der Raststruktur ist. Dieser Aufbau hat den Vorteil, dass z.B. eine Drehung um 180° der Installationsdose um die Mittelachse bei gegenüberliegenden heraustrennbaren Wandbereichen und Raststrukturen keine Auswirkung auf die Wirkverbindbarkeit hat. Je nach Ausgestaltung kann das mindestens eine erste Rastelement in eine erste Richtung (y-Richtung), welche senkrecht zur axialen Richtung (x-Richtung) und senkrecht zur Verbindungsrichtung (z-Richtung) angeordnet ist, hinterschnittsfrei ausgestaltet sein. Das mindestens eine zweite Rastelement kann wiederum in eine zur ersten Richtung entgegengesetzt angeordneten zweiten Richtung (negative y-Richtung) hinterschnittsfrei ausgestaltet sein. Dies ist insbesondere von Vorteil bei der Herstellung der Installationsdose durch Spritzguss.

Der heraustrennbare Wandbereich kann mehrere separat oder gemeinsame heraustrennbare Sektionen umfassen. Je nach Anwendung können die mehreren Sektionen in axialer Richtung hintereinander angeordnet sein. Je eine heraustrennbare Sektion kann zumindest bereichsweise von einer Dichtung umgeben sein. Alternativ oder ergänzend kann die Dichtung ebenfalls mehrere Sektionen gemeinsam zumindest bereichsweise umgeben. Pro Sektion kann mindestens ein Paar Rastelemente vorhanden sein. D.h. es sind dann pro Sektion in Bezug auf diese Sektion gegenüberliegende erste und zweite Rastelemente vorhanden.

Je nach Anwendung können in axialer Richtung mindestens zwei Sektionen hintereinander angeordnet sein (eine vorderseitige Sektion und eine rückseitige Sektion und optional mindestens eine mittlere Sektion). Die vorderseitige Sektion kann hierbei an die Installationsöffnung angrenzen. An der vorderseitigen Sektion kann an einer Innenseite, welche zum Installationsraum hinweist, die zuvor erwähnten Befestigungselemente angeordnet sein. Mit Vorteil sind die Befestigungselemente an die jeweilige vorderseitige Sektion angeformt. Durch das Heraustrennen der vorderseitigen Sektionen können die Befestigungselemente mit entfernt werden. Weiterhin kann in einer oder in mehreren Sektionen, insbesondere in der rückseitigen und/oder (wenn vorhanden) der mittleren Sektion, je eine Rohreinführung angeordnet sein. Die jeweilige Rohreinführung kann durch eine heraustrennbare oder durchstechbare weichelastische Membran verschlossen sein.

Die vorliegende Installationsdose umfasst mindestens eine Spitzgussmaterialkomponente. Mit Vorteil besteht die Installationsdose aus mindestens einer Spitzgussmaterialkomponente, insbesondere einer Hartplastikkomponente. Die Installationsdose kann jedoch auch mehrere Spitzgussmaterialkomponenten umfassen. Beispielsweise kann die Installationsdose mindestens zwei Spitzgussmaterialkomponenten umfassen, wie z.B. die Hartplastikkomponente und die weichelastische Materialkomponente oder auch die Hartplastikkomponente und eine intumeszierende Materialkomponente.

Die vorliegende Erfindung bezieht sich weiter auf ein Verfahren zur Herstellung einer Installationsdose für elektrotechnische Installationen. Die Installationsdose weist einen Dosenkörper aus einer Hartplastikkomponente auf mit einer sich in eine axiale Richtung von einem vorderseitigen Ende zu einem rückseitigen Ende erstreckenden röhrenförmigen Seitenwand, welche einen Installationsraum umgibt. Der Installationsraum ist über eine vorderseitige von der röhrenförmigen Seitenwand berandete Installationsöffnung zugänglich. Der Installationsöffnung gegenüberliegend ist ein Dosenboden des Dosenkörpers. Aus der axialen Richtung betrachtet bildet die röhrenförmige Seitenwand ferner mindestens eine nach aussen über eine Innenkontur der Installationsöffnung vorragende Tasche aus. Die Tasche formt einen Tascheninnenraum aus, welcher Teil des Installationsraums ist. Die besagte Installationsdose wird hierbei durch Spritzguss hergestellt, wobei nach dem Spritzen der Installationsdose diese durch einen in dem Installationsraum angeordneten Faltkern entformt wird, welcher vorderseitig durch die Installationsöffnung entfernbar ist.

Mit Vorteil ist der Faltkern an einem distalen Ende des Faltkerns in seinem Querschnitt veränderbar, insbesondere in seinem Querschnitt normal zur axialen Richtung. Die axiale Richtung der Installationsdose entspricht hierbei der Entformungsrichtung des Faltkerns.

Mit Vorteil kann der Faltkern von einer ersten Stellung in eine zweite Stellung verstellbar sein. Hierbei kann das distale Ende des Faltkerns in der ersten Stellung aus der axialen Richtung betrachtet eine erste Aussenkontur aufweisen und in der zweiten Stellung aus der axialen Richtung betrachtet eine zweite Aussenkontur aufweisen. Hierbei liegt nur die zweite Aussenkontur (nicht jedoch die erste Aussenkontur) innerhalb der Innenkontur der Installationsöffnung. Das distale Ende des Faltkerns ist hierbei das Ende des Faltkerns, welches nach dem Spritzen der Installationsdose im Installationsraum angeordnet ist. In anderen Worten: Das distale Ende ist der Teil vom Faltkern, welcher nach dem Spitzen wieder aus der Installationsdose entformt werden muss. Das erfindungsgemässe Verfahren kann also den Verfahrensschritt umfassen wonach der Faltkern sich während des Spritzens in der ersten Stellung befindet, nach dem Spritzen in die zweite Stellung gebracht wird, bevor der Faltkern, welcher nach dem Spritzen bereichsweise (d.h. mit seinem distalen Ende) in dem Installationsraum angeordnet ist, durch die Installationsöffnung in axiale Richtung der Installationsdose entformt wird.

Für den Fall, dass die Installationsdose Elemente oder Schichten aus der weichelastischen Materialkomponente aufweist (wie z.B. eine die Einführöffnung verschliessende Membran und/oder eine Dichtung), wird die Installationsdose im 2-Komponenten-Spritzgussverfahren hergestellt. Somit kann das Verfahren den weiteren Verfahrensschritt umfassen, wonach zuerst der Dosenkörper aus der Hartplastikkomponente gespritzt wird und anschliessend zusätzliche Elemente und/oder Schichten aus einer weichelastischen Materialkomponente an den Dosenkörper angespritzt werden (wie eine die Einführöffnungen des Dosenkörpers aus der Hartplastikkomponente verschliessende Membran und/oder eine Dichtung). Der Faltkern bleibt hierbei mit Vorzug während dem Spritzen der Hartplastikkomponente und dem Spritzen der weichelastischen Materialkomponente im Installationsraum angeordnet und wird erst anschliessend vorderseitig durch die Installationsöffnung entfernt.

Der Faltkern kann hierfür eine Basis und mindestens ein zu der Basis bewegliches Segment aufweisen. Die Anzahl der beweglichen Segmente kann hierbei der Anzahl der vorangehend beschriebenen Taschen des Installationsraums entsprechen. Wenn mehrere Segmente vorhanden sind können diese miteinander wirkverbunden sein. Die Basis weist mit Vorzug eine Gleitfläche auf, entlang welcher eine korrespondierende Gleitfläche des Segmentes entlang gleiten kann, wenn der Faltkern von der ersten Stellung in die zweite Stellung gebracht wird (oder vice versa). Je nach Verfahren kann der Faltkern weiter über ein Steuerungssystem verfügen, das eine Entfaltungs- und Zurückfaltbewegungen des Faltkerns steuert. Dieses Steuerungssystem kann elektronisch, pneumatisch oder hydraulisch sein.

Je nach Verfahren kann es vorteilhaft sein, wenn die erste Aussenkontur und die zweite Aussenkontur des distalen Endes des Faltkerns mindestens drei Positionierecken aufweisen, welche ihre jeweilige Position unverändert in der ersten und der zweiten Stellung des Faltkerns halten. Mit Vorteil umfasst der Faltkern jedoch mindestens vier Positionierecken. Die Positionierecken sind mit Vorzug an der Basis des Faltkerns angeordnet. D.h. die Basis des Faltkerns kann mit der Installationsdose in Kontakt stehen. Die Positionierecken dienen dazu die gespritzte Installationsdose zu positionieren, wenn der Faltkern entformt wird.

Je nach Ausgestaltung kann die Installationsdose im Bereich des vorderseitigen Endes der röhrenförmigen Seitenwand Befestigungselemente zum Befestigen einer Elektroinstallation in der Installationsdose aufweisen, welche in den Installationsraum und/oder in die Installationsöffnung ragen. In diesem Fall bietet es sich an, wenn die zweite Aussenkontur des distalen Endes des Faltkerns normal zur axialen Richtung derart verkleinerbar ist, dass dieser aus der Installationsöffnung und an den Befestigungselementen vorbei entformbar ist. Hierzu kann der Faltkern weitere (bewegliche) Segmente aufweisen, welche den Installationsraum rückseitig der jeweiligen Befestigungselemente beim Spritzen ausfüllt.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer Installationsdose gemäss der Erfindung in einer perspektivischen Ansicht;
- Fig. 2: Die Installationsdose gemäss Fig. 1 in einer Ansicht von der Seite;
- Fig. 3: Die Installationsdose gemäss Fig. 1 in einer Ansicht von oben;
- Fig. 4: Darstellung einer erfindungsgemässen Installationsdose mit einer schematischen Skizze eines Faltkerns.

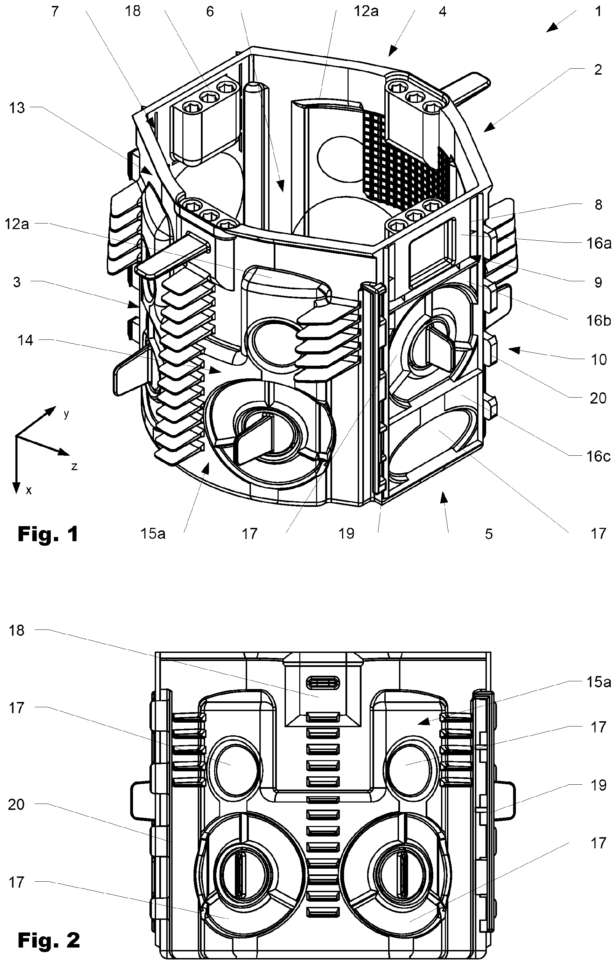

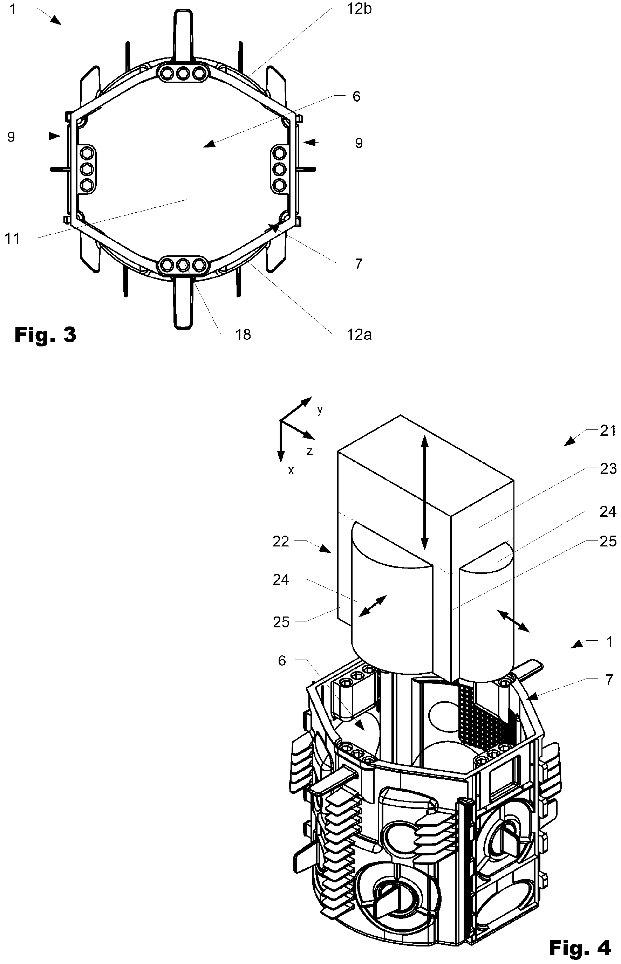

**Figur 1** zeigt eine erste Variante einer Installationsdose 1 gemäss der Erfindung in einer perspektivischen Ansicht, während **Figur 2** diese Installationsdose 1 in einer Ansicht von der Seite und **Figur 3** in einer Ansicht von oben darstellt.

Die gezeigte Installationsdose 1 umfasst einen Dosenkörper 2 mit einer sich in eine axiale Richtung (x-Richtung) von einem vorderseitigen Ende 4 zu einem rückseitigen Ende 5 erstreckenden röhrenförmigen Seitenwand 3. Die röhrenförmigen Seitenwand 3 umgibt einen Installationsraum 6. Dieser ist über eine vorderseitige, von der röhrenförmigen Seitenwand 3 berandete, Installationsöffnung 7 zugänglich. Gegenüberliegend der Installationsöffnung 7 befindet sich ein Dosenboden 11 des Dosenkörpers 2, welcher in die röhrenförmige Seitenwand 3 übergeht.

Wie in insbesondere in **Figur 2** und **Figur 3** gut erkennbar, bildet die röhrenförmige Seitenwand 3 aus der axialen Richtung betrachtet mindestens eine nach aussen über eine Innenkontur der Installationsöffnung 7 vorragende Tasche 15 aus. In der Seitenansicht in **Figur 2** ist die Tasche 15 U-förmig erkennbar. Der Installationsraum 6 weist in axialer Richtung also einen variablen Querschnitt auf. In dem vorderseitigen Bereich 13 des Installationsraumes 6 weist dieser hierbei normal zur axialen Richtung (mindestens) einen ersten Querschnitt und in dem rückseitigen Bereich 14 des Installationsraumes 6 (mindestens) einen im Bezug zum ersten Querschnitt grösseren zweiten Querschnitt auf.

Die zwischen den zwei sich gegenüberliegenden Taschen 15 sind zwei Wandbereiche 9 der röhrenförmigen Seitenwand 3 angeordnet. Diese können entlang einer definierten Kontur 8 heraustrennbar sein. Im vorliegenden Fall sind die beiden Wandbereiche 9 in Bezug zu der Mittelachse der röhrenförmigen Seitenwand 3 gegenüberliegend voneinander.

Wie in **Figur 1** gut erkennbar ist, kann der heraustrennbare Wandbereich 9 mehrere separat oder gemeinsame heraustrennbare Sektionen 16 umfassen. Im vorliegenden Beispiel sind drei Sektionen 16a, 16b 16c vorhanden. Die drei Sektionen 16a, 16b 16c sind in axialer Richtung hintereinander angeordnet. Im vorliegenden Beispiel weist die mittlere Sektion 16b und die die rückseitige Sektion 16c je eine heraustrennbare Membran 17 auf. An der vorderseitigen Sektion 16a können an einer Innenseite Befestigungselemente 18 angeformt sein, welche in den Installationsraum 6. Bzw. in die Installationsöffnung 7 hineinragen. An einer Aussenseite der röhrenförmigen Seitenwand 3 ist weiter eine Raststruktur 10 ersichtlich. Die Raststruktur 10 dient zum Wirkverbinden einer Gegenraststruktur einer weiteren Installationsdose aus einer Verbindungsrichtung (z-Richtung). Für eine leichte Aneinanderreihung baugleicher Installationsdosen, kann die Raststruktur 10 mindestens ein Paar Rastelemente (pro heraustrennbaren Wandbereich 9) mit einem ersten und einem zweiten Rastelement 19, 20 umfassen.

**Figur 4** zeigt eine Installationsdose 1 mit einem schematischen dargestellten Faltkern 21 kurz nach der Herstellung der Installationsdose 1 mittels Spritzguss. Während der Faltkern 21 während des Spritzens noch mit einem distalen Ende 22 im Installationsraum 6 der Installationsdose 1 angeordnet ist, wird dieser nach dem Spritzen durch die Installationsöffnung 7 entfernt. Während des Spritzens in der Faltkern 21 hierbei in einer ersten Stellung. Zum Entformen wird der Faltkern 21 anschliessend von der ersten Stellung in eine zweite Stellung gebracht. Das distale Ende 22 des Faltkerns 21 in der ersten Stellung weist aus der axialen Richtung betrachtet eine erste Aussenkontur auf und in der zweiten Stellung aus der axialen Richtung betrachtet eine zweite Aussenkontur auf. Hierbei passt nur die zweite Aussenkontur durch die Installationsöffnung 7. In der zweiten Stellung wird der Faltkern 21 aus dem Installationsraum 6 durch die Installationsöffnung 7 entfernt.

Der Faltkern 21 kann hierbei eine Basis 23 und mindestens ein zu der Basis 23 bewegliches Segment 24 aufweisen. Wenn, wie dargestellt mehrere Segmente 24 vorhanden sind, können diese miteinander wirkverbunden sein. Die Basis 23 weist mit Vorzug eine Gleitfläche (nicht dargestellt) auf, entlang welcher eine korrespondierende Gleitfläche der jeweiligen Segmente 24 entlang gleiten kann, wenn der Faltkern 21 von der ersten Stellung in die zweite Stellung gebracht wird (oder vice versa). Je nach Verfahren kann es vorteilhaft sein, wenn die erste Aussenkontur und die zweite Aussenkontur mindestens drei Positionierecken 25 aufweisen, welche ihre jeweilige Position unverändert in der ersten und der zweiten Stellung des Faltkerns 21 halten. Im gezeigten Fall umfasst der Faltkern 21 vier Positionierecken 25. Die Positionierecken 25 sind an der Basis 23 des Faltkerns 21 angeordnet und stehen während des Spritzens mit den Rändern des heraustrennbaren Wandbereichs 9 der Installationsdose 1 in Kontakt.

### LISTE DER BEZUGSZEICHEN

| | | | |
|---|---|---|---|
| 1 | Installationsdose | 14 | Rückseitige Bereich |
| 2 | Dosenkörper | 15 | Tasche |
| 3 | Seitenwand | 16 | Sektion |
| 4 | Vorderseitiges Ende | 17 | Membran |
| 5 | Rückseitiges Ende | 18 | Befestigungselement |
| 6 | Installationsraum | 19 | Erstes Rastelement |
| 7 | Installationsöffnung | 20 | Zweites Rastelement |
| 8 | Kontur | 21 | Faltkern |
| 9 | Wandbereich | 22 | Distales Ende |
| 10 | Raststruktur | 23 | Basis |
| 11 | Dosenboden | 24 | Segment |
| 12 | Absatz | 25 | Positionierecke |
| 13 | Vorderseitige Bereich | | |

## Patentansprüche

1. Installationsdose (1) für elektrotechnische Installationen, die Installationsdose (1) umfassend
a. einen Dosenkörper (2) aus einer Hartplastikkomponente mit einer sich in eine axiale Richtung (x) von einem vorderseitigen Ende (4) zu einem rückseitigen Ende (5) erstreckenden röhrenförmigen Seitenwand (3), welche einen Installationsraum (6) umgibt, der über eine vorderseitige, von der röhrenförmigen Seitenwand (3) berandete Installationsöffnung (7) zugänglich ist, und einen der Installationsöffnung (7) gegenüberliegenden Dosenboden (11); wobei
b. die röhrenförmige Seitenwand (3) aus der axialen Richtung betrachtet mindestens eine nach aussen über eine Innenkontur der Installationsöffnung (7) vorragende Tasche (15) ausbildet.

2. Installationsdose (1) gemäss Anspruch 1, **dadurch gekennzeichnet, dass** der Dosenkörper (2) mindestens eine Einführöffnung aufweist, welche in der mindestens einen Tasche (15) angeordnet ist.

3. Installationsdose (1) gemäss Anspruch 2, **dadurch gekennzeichnet, dass** die Einführöffnung in einem initialen Zustand durch einen Wandbereich oder eine Membran (17) verschlossen ist.

4. Installationsdose (1) gemäss einem der vorangehenden Ansprüche, **dadurch gekennzeichnet, dass** die Tasche (15) in Umfangsrichtung nach aussen gewölbt ausgeformt ist.

5. Installationsdose (1) gemäss einem der vorangehenden Ansprüche, **dadurch gekennzeichnet, dass** die Tasche (15) an einer Umfangsposition eine im Wesentlichen gleichbleibende Taschentiefe in axialer Richtung aufweist.

6. Installationsdose (1) gemäss einem der vorangehenden Ansprüche, **dadurch gekennzeichnet, dass** die Tasche (15) formstabil ist.

7. Installationsdose (1) gemäss einem der vorangehenden Ansprüche, **dadurch gekennzeichnet, dass** die Installationsdose (1) im Bereich des vorderseitigen Endes (4) eine im wesentlichen polygone Aussenkontur aufweist.

8. Installationsdose (1) gemäss einem der vorangehenden Ansprüche, **dadurch gekennzeichnet, dass** im Bereich des vorderseitigen Endes (4) der röhrenförmigen Seitenwand (3) Befestigungselemente (18) zum Befestigen einer Elektroinstallation in der Installationsdose (1) angeordnet sind, welche in den Installationsraum (6) und/oder die Installationsöffnung (7) ragen.

9. Installationsdose (1) gemäss einem der vorangehenden Ansprüche, **dadurch gekennzeichnet, dass** die Installationsdose (1) mindestens einen in der röhrenförmigen Seitenwand (3) angeordneten und entlang einer definierten Kontur (8) heraustrennbaren Wandbereich (9) umfasst.

10. Installationsdose (1) gemäss Anspruch 9, **dadurch gekennzeichnet, dass** die Installationsdose (1) zwei heraustrennbare Wandbereiche (9) umfasst zwischen denen in eine Umfangsrichtung der Seitenwand (3) die mindestens eine Tasche (15) angeordnet ist.

11. Verfahren zur Herstellung einer Installationsdose für elektrotechnische Installationen durch Spritzguss, wobei
a. die Installationsdose einen Dosenkörper (2) aus einer Hartplastickomponente mit einer sich in eine axiale Richtung (x) von einem vorderseitigen Ende (4) zu einem rückseitigen Ende (5) erstreckenden röhrenförmigen Seitenwand (3), welche einen Installationsraum (6) umgibt, der über eine vorderseitige von der röhrenförmigen Seitenwand (3) berandete Installationsöffnung (7) zugänglich ist, und einem der Installationsöffnung (7) gegenüberliegenden Dosenboden (11); wobei
b. die röhrenförmige Seitenwand (3) aus der axialen Richtung betrachtet mindestens eine über eine Innenkontur der Installationsöffnung (7) nach aussen vorragende Tasche (15) ausbildet; und
c. nach dem Spritzen der Installationsdose (1) diese durch einen zumindest bereichsweise in dem Installationsraum angeordneten Faltkern (21) entformt wird, welcher vorderseitig durch die Installationsöffnung (7) entfernbar ist.

12. Verfahren gemäss Patentanspruch 11, wobei der Faltkern (22) an einem distalen Ende (22) des Faltkerns (21) in seinem Querschnitt veränderbar ist.

13. Verfahren gemäss Patentanspruch 12, wobei der Faltkern von einer ersten zu einer zweiten Stellung verstellbar ist, wobei das distale Ende (22) des Faltkern (21) in der ersten Stellung aus der axialen Richtung betrachtet eine erste Aussenkontur und in der zweiten Stellung aus der axialen Richtung betrachtet eine zweite Aussenkontur aufweist.

14. Verfahren gemäss einem der Patentansprüche 13, wobei die erste Aussenkontur und die zweite Aussenkontur mindestens drei Positionierecken (25) aufweisen, welche ihre jeweilige Position unverändert in der ersten und der zweiten Stellung des Faltkerns (21) halten.

15. Verfahren gemäss Patentanspruch 13, wobei
a. an dem vorderseitigen Ende (4) der röhrenförmigen Seitenwand Befestigungselemente (18) zum Befestigen einer Elektroinstallation in der Installationsdose (1) angeordnet sind, welche in den Installationsraum (6) ragen; und
b. die zweite Aussenkontur des distalen Endes (22) des Faltkerns (21) aus der axialen Richtung betrachtet derart verkleinerbar ist, dass dieser aus der Installationsöffnung (7) und an den Befestigungselementen (18) vorbei entformbar ist.
